# EUROPEAN PATENT APPLICATION

(11) **EP 2 383 929 A1**
(43) Date of publication of application: **02.11.2011**
(21) Application number: 11175311.7
(22) Date of filing: 24.06.2008
(51) Int. Cl.: H04L 5/02, H04N 7/18

(54) **Transmission method, transmission apparatus, video equipment, and display apparatus**

(30) Priority: 13.09.2007 JP 2007237391; 13.09.2007 JP 2007237392; 13.09.2007 JP 2007237393
(62) Divisional of application: 08252163.4
(71) Applicant: Hitachi Ltd., Tokyo (JP)
(72) Inventor: Kurita, Toshiyuki, Tokyo, 100-8220 (JP); Owashi, Hitoaki, Tokyo, 100-8220 (JP)
(74) Representative: Calderbank, Thomas Roger

(57) **Abstract**

The present invention provides technology for improving the convenience of information transmission and connection in the case of transmitting information by connecting together a plurality of pieces of video equipment (100, 200, 300). To that end, the present invention is one that transmits a baseband video signal and/or a compressed video signal between a first piece of video equipment (100) and a second piece of video equipment (200) by means of a bidirectional interface 10 and is characterized by the fact that the aforementioned bidirectional interface (10) has transmission rates that are asymmetric in the uplink and the downlink, narrowband information is transmitted in the downlink in case broadband information is transmitted in the uplink, and narrowband information is transmitted in the uplink in case broadband information is transmitted in the downlink.

## Description

The present invention pertains to technology for transmitting information such as video signals between a plurality of pieces of video equipment using a bidirectional interface.

In order to connect a piece of video equipment and a video display device, being another piece of video equipment, to view images and the like, the method of making an analog connection to transmit video signals and audio signals has come to be used. However, accompanying the spread of digital equipment, there is used, from the viewpoint of preventing image quality degradation and the viewpoint of copyright protection, the method of making a digital connection to cipher and transmit video signals and audio signals.

As an example of digital transmission, there is known transmission compliant with the IEEE 1394 Standard and using one cable. This is a standard in which mutual authentication between pieces of equipment performing transmission and reception is carried out, video signals and audio signals are multiplexed after the authentication, and the multiplexed data are processed with encryption called DTCP (Digital Transmission Content Protection) and transmitted.

As another example, there is known the HDMI (High Definition Multimedia Interface) scheme. In the HDMI scheme, it is possible to multiplex baseband signals of high-definition video signals and audio signals by time division, carry out encryption processing called HDCP (High Definition Content Protection), and transmit the data.

As prior art of this kind with which video signals and audio signals are digitized and transmitted, there is e.g. a disclosure made in JP-A-2002-232377.

As for the aforementioned IEEE 1394 Standard, since it is used as a network and the transmission rate at which it can transmit and receive is also limited, high-definition video signals with a high information volume cannot be sent unchanged in a baseband signal state. For this reason, there is the issue that, in the IEEE 1394 Standard, the baseband signals must be compressed and transmitted with a reduced transmission rate. Moreover, in the HDMI scheme, for the equipment receiving the transmitted high-definition video signals, there is no consideration given to storing the same received signals.

Also, in these schemes, a connection between stationary pieces of equipment placed inside a residence was assumed for all and insufficient consideration was given to the matter of conveniently connecting portable equipment, such as a digital camera or a cellular phone, with video display devices.

The present invention is one formed to take problems of this kind into consideration. And then, the present invention resides in furnishing technology suitable for improving convenience in the case of connecting a plurality of pieces of video equipment among themselves. In addition, it is also one that furnishes technology for conveniently connecting portable equipment, such as a digital camera and a cellular phone, with video display devices. Moreover, the present invention furnishes technology for improving the convenience of video equipment provided with imaging devices. Still further, the present invention furnishes technology for improving the convenience of video information in display devices.

A first aspect of the present invention is to make it more possible to transmit baseband video signals and/or compressed video signals to a bidirectional interface and resides, in a transmission method with a bidirectional transmission interface having asymmetric transmission rates in the uplink and the downlink, in transmitting narrowband information in the downlink in the case of transmitting broadband information in the uplink and transmitting narrowband information in the uplink in the case of transmitting broadband information in the downlink. That is to say that a first aspect like this is one in which, in the case of carrying out transmission of information over a bidirectional interface by connecting a plurality of pieces of video equipment, e.g. a first piece of video equipment and a second piece of video equipment, and in the case of broadband information being transmitted either from the first piece of video equipment to the second piece of video equipment, or from the second piece of video equipment to the first piece of video equipment, other information is taken to be narrowband in relative terms.

According to the configuration of a first aspect : like this of the present invention, since it is possible to transmit with respect to baseband video signals and also with respect to compressed video signals, it becomes feasible to carry out a signal connection or the like between portable equipment, such as a digital camera or a cellular phone, and video display devices, or among these pieces of portable equipment. In particular, it becomes possible to efficiently transmit and receive video signals and control signals between pieces of equipment within a limited band by transmitting narrowband information in the downlink in the case of transmitting broadband information in the uplink and transmitting narrowband information in the uplink in the case of transmitting broadband information in the downlink. Consequently, according to the first aspect it becomes possible to enhance the convenience of information transmission and connection in the case of connecting a plurality of pieces of video equipment among themselves and transmitting information.

Moreover, a second aspect of the present invention is a piece of video equipment having an imaging part and a microphone, having: a first compression part compressing the baseband video signal for an image imaged in the aforementioned imaging part; a second compression part compressing the baseband audio signal from the aforementioned microphone; a wireless input part receiving a compressed information signal; a first expansion part expanding a compressed video signal included in the information signal input into the aforementioned wireless input part to obtain a baseband video signal; a second expansion part expanding a compressed audio signal included in the information signal input into the aforementioned wireless input part to obtain a baseband audio signal; and an output part capable of outputting at least either of: compressed information including the compressed video signal obtained in the aforementioned first compression part and the compressed audio signal obtained in the aforementioned second compression part, and a baseband signal including the baseband video signal obtained in the aforementioned first expansion part and the baseband audio signal obtained in the aforementioned second expansion part.

According to a second aspect like this, it becomes possible to transmit both a baseband video signal and a compressed video signal and it becomes feasible to send convenient information signals not only with respect to video display devices but also with respect to portable equipment such as a digital camera or a cellular phone. Consequently, according to the second aspect of the present invention, it becomes possible to enhance the convenience of a piece of video equipment provided with an imaging device.

Still further, a third aspect of the present invention resides in comprising: an input part capable of inputting encrypted compressed video information; an encryption and decryption part decrypting the compressed video information input by means of the aforementioned input part and first baseband video information; a storage part storing compressed video information decrypted in the aforementioned encryption and decryption part; an expansion part for expanding compressed video information decrypted in the aforementioned encryption and decryption part to obtain second baseband video information; and a display part displaying at least either of the first baseband video information decrypted in the aforementioned encryption and decryption part and the second baseband video information from the aforementioned expansion part.

As for this kind of third aspect since the decrypted first baseband video information or the second baseband video information from the aforementioned expansion part can be displayed, it becomes possible to conveniently display mutual video information in case portable equipment, such as a digital camera or a cellular phone, and the video display device are connected, or in case a signal connection is carried out between these portable pieces of equipment. Consequently, according to the third aspect of the present invention, it becomes possible to enhance the convenience of video information in a display device.

Other objects, features and advantages of the invention will become apparent from the following description of the embodiments of the invention taken in conjunction with the accompanying drawings.

### IN THE DRAWINGS

Fig. 1 is a diagram showing an embodiment of the present invention;
Fig. 2 is a diagram showing an example of a piece of video equipment 100 concerned with an embodiment of the present invention;
Figs. 3A to 3E are explanatory diagrams showing the order of the compressed signal processing;
Fig. 4 is a diagram showing an example of a video display device 200 concerned with an embodiment of the present invention;
Fig. 5 is a diagram showing another example of a video display device 200 concerned with an embodiment of the present invention;
Fig. 6 is a diagram showing an example of a system in which two pieces of video equipment are connected with another;
Fig. 7 is a diagram showing an example of a system in which a video display device and a piece of video equipment are connected;
Fig. 8 is a diagram showing an example of a system in which two pieces of video equipment are connected wirelessly with another; and
Fig. 9 is a diagram showing another example of a system in which two pieces of video equipment are connected wirelessly with another.

Hereinafter, an explanation of a preferred embodiment of the present invention will be given.

### First Embodiment

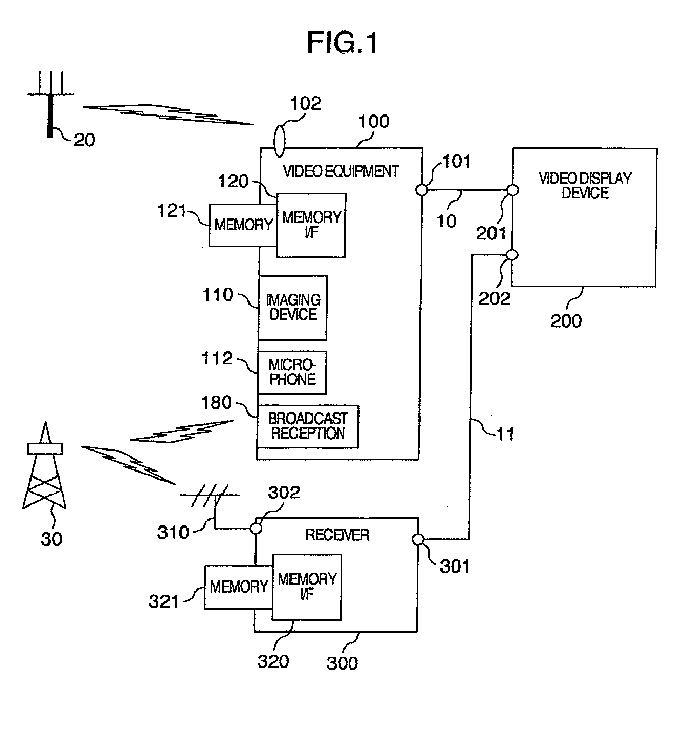

Fig. 1 shows Embodiment 1 of the present invention. In Fig. 1, as video equipment, there are e.g. shown three pieces of video equipment. One is a piece of video equipment 100 which is e.g. a portable piece of video equipment capable of receiving digital broadcast signals from a cellular phone base station antenna 20 or a broadcast transmission tower 30, another one is a video display device 200, and yet another one is a receiver 300, such as e.g. a tuner, capable of receiving a digital broadcast signal from a broadcast transmission tower 30. Piece of video equipment 100 and video display device 200 are e.g. connected over a bidirectional interface 10 and further, video display device 200 and receiver 300 are connected over a separate bidirectional interface 11. In this way, bidirectional signal communication is taken to be possible for video signals and other information and signals between each of the pieces of equipment.

In the present embodiment, portable piece of video equipment 100 is specifically a digital camera, a video camera, a cellular phone set, a game platform, a personal media player, or the like. Depending on the respective configurations, the needed constituent elements are not necessarily the same, but in the embodiment shown in Fig. 1, there are mainly described the constituent elements needed for input to and output from the exterior.

In Fig. 1, cellular phone base station antenna 20 and an antenna 102 of piece of video equipment 100 carry out signal transmission and reception. In case piece of video equipment 100 is utilized as a cellular phone, normal signal processing as for a cellular phone is carried out. Moreover, piece of video equipment 100 can also receive contents such as a motion picture transmitted from cellular phone base station antenna 20. In this case, the contents can both be viewed with a display device and an audio output device built into piece of video equipment 100 and viewed on large screen with an external video display device 200 via a terminal 101, connecting cable 10, and a terminal 201. Further, while viewing the content, or in order to view the content later, the concerned content can also be recorded on a storage medium built into piece of video equipment 100 or on a storage medium (e.g. a memory 121) connected to piece of video equipment 100. Memory 121 can also be utilized as a recording medium for the recording of motion pictures and the like.

Similarly, a program broadcast from broadcast transmission tower 30 is received with a broadcast receiver 180 of piece of video equipment 100 and can be viewed with piece of video equipment 100 or recorded with a storage medium (not illustrated) built into piece of video equipment 100 or a connected storage medium (e.g. memory 121). Further, it is also possible to view it with video display device 200 via terminal 101, connecting cable 10, and terminal 201.

Also, a program broadcast from broadcast transmission tower 30 is received with a receiving antenna 310 connected to a receiver 300, input into receiver 300 via an antenna terminal 302 and, after suitable signal processing has been performed, is viewed with video display device 200 via a terminal 301, connecting cable 11, and a terminal 202. Moreover, it is also possible, simultaneously with the viewing, to store the program in a built-in storage medium (not illustrated) or in a memory 321 via a memory interface 320. It is also possible to connect memory 321, recorded in receiver 300, with memory interface 120 of piece of video equipment 100. If piece of video equipment 100 is brought outside the home and the program is displayed on the display device (not illustrated) built into piece of video equipment 100, a program recorded in the home can also be viewed outside the home.

Still further, by equipping piece of video equipment 100 with an imaging device 110 and a microphone 112, it is possible to take a still picture or a moving picture together with the sound and to record the same in a suitable built-in storage medium (not illustrated) or memory 121. The video and sound stored in the built-in storage medium or memory 121 can be viewed with video display device 200 via terminal 101, connecting cable 10, and terminal 201.

In the embodiment shown in Fig. 1, there is shown the case of connecting respectively terminal 101 of piece of video equipment 100 and terminal 201 of video display device 200, and terminal 301 of receiver 300 and terminal 201 of video display device 200 with a wired cable such as connecting cable 10 or 11. However, in case transmission and reception is carried out between these pieces of video equipment, there is no need to make a connection using a wired cable, it being acceptable to make a wireless connection. If a wireless connection is chosen, there is no need for the troublesomeness and arrangement of electric wiring. In case a connecting cable is used, there is the advantage of its being stronger with respect to interference from noise and the like, in comparison with a wireless connection.

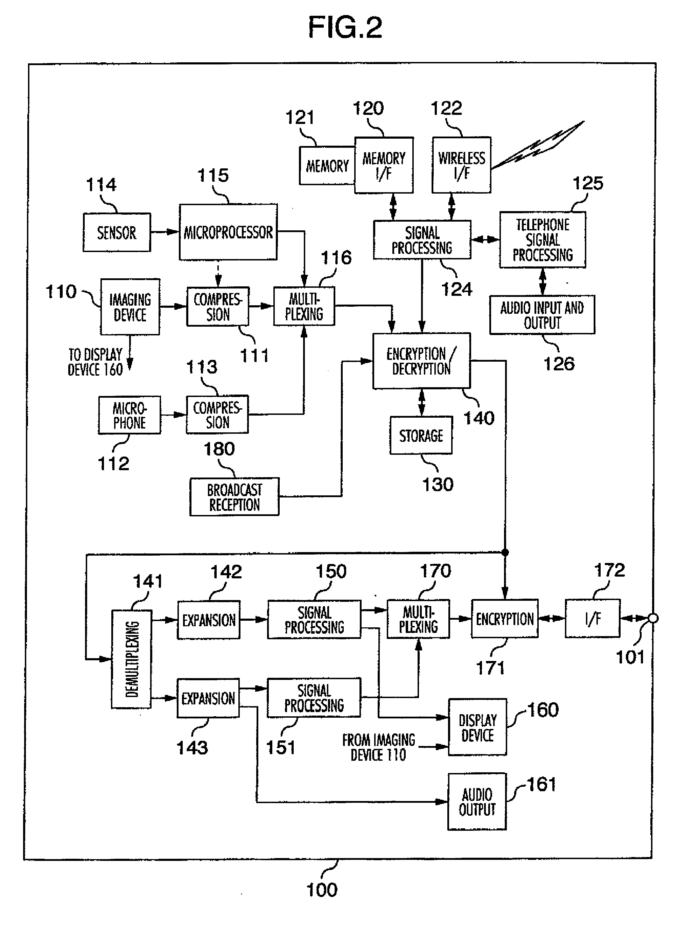

Fig. 2 is a diagram showing Embodiment 1 of the present invention and showing a specific configuration of piece of video equipment 100 of Fig. 1. In Fig. 2, in imaging device 110, moving images and still images are introduced through an optical system and converted into electrical signals. In a compression circuit 111, the introduced image is bit compressed efficiently using a compression scheme such as e.g. MPEG2, MPEG4, or AVC/H.264 in the case of a moving image, or using a compression scheme such as e.g. JPEG in the case of a still image.

Moreover, in microphone 112, sound waves are converted into electrical signals. In a compression circuit 113, using a compression scheme such as e.g. MPEG Audio, the introduced audio signal is bit compressed efficiently.

In the case of recording a still image with piece of video equipment 100, in response to the object to be recorded, the recording is carried out by rotating the video equipment, performing operations like using it in the landscape position or using it in a portrait position. A sensor 114 detects whether piece of video equipment 100 is used for recording in the landscape position or whether it is recording in a portrait position. In case it is used in a portrait position, it is also simultaneously detected whether the right-hand side of piece of video equipment 100 was turned up or whether the left-hand side was turned up. The information detected by sensor 114 is input into a microprocessor 115.

In a multiplexing circuit 116, as for the bit compressed video signals and audio signals from compression circuits 111 and 113, various pieces of information from microprocessor 115 are, further, input in accordance with a prescribed format and multiplexed. In case a still image has been recorded, an audio signal is normally not introduced, but it is acceptable to multiplex an audio signal conjunctively with the still image.

As various pieces of information from microprocessor 115, there is information such as information about the position used by sensor 114 (landscape, right-hand portrait, and left-hand portrait), the date, and information about exposure at the time of recording.

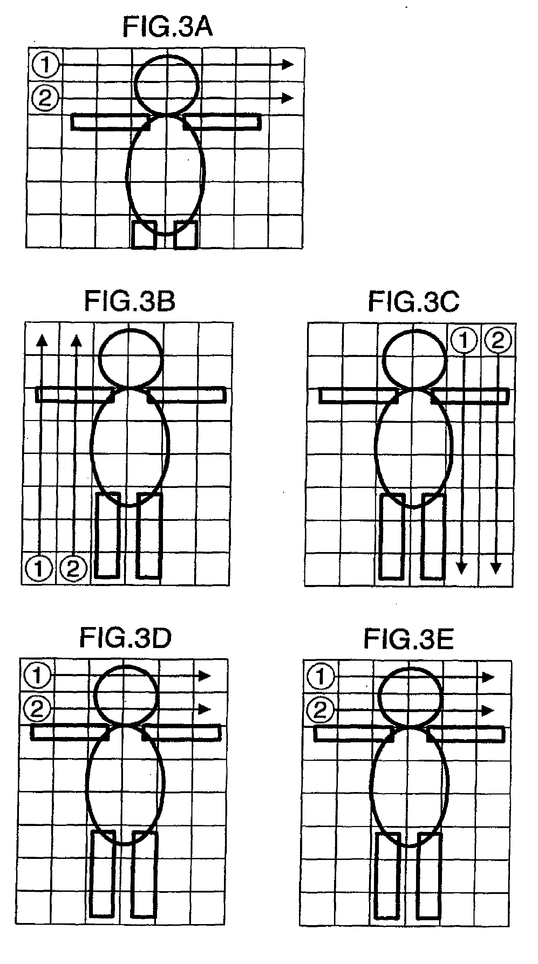

Figs. 3A to 3E are diagrams showing the order of signal processing for each block which is generally carried out in image compression. As shown in Fig. 3A, signal processing is carried out in the order from left to right of the uppermost row of the image and subsequently, signal processing is carried out in the order from left to right in the second row. As shown in Fig. 3B, in the case where piece of video equipment 100 is chosen to be in a portrait position with the right-hand side up, signal processing is carried out in the leftmost column from the bottom to the top and next, in the second leftmost column from the bottom to the top. As shown in Fig. 3C, in the case where piece of video equipment 100 is chosen to be in a portrait position with the left-hand side on top, signal processing is carried out in the rightmost column from the top to the bottom and subsequently, in the second rightmost column from the top to the bottom.

In case a portrait position is chosen during recording, if there is no information about whether the left-hand or right-hand side is chosen to be on top, it cannot be displayed just as recorded at the time of showing the recorded video on a display device. To that end, as mentioned above, positional information is multiplexed in the video signals and audio signals as one of the various pieces of information from microprocessor 115. By expanding the compressed signal, adapting it to the output of the display device, and rotating by 90 degrees the image expanded using the positional information, it is possible to carry out a display just as recorded.

Also, as shown in Fig. 2 with a dotted line from microprocessor 115 toward compression circuit 111, rather than multiplexing positional information, positional information is supplied from microprocessor 115 to compression circuit 111 to control compression circuit 111. In this way, it is possible to eliminate the need for rotation processing during playback due to the fact that compression circuit 111 carries out the compressed signal processing itself in accordance with the video recording operation and the recording position of piece of video equipment 100. E.g., as shown in Figs. 3D and 3E, it is possible to carry out a display during playback just as recorded by carrying out compressed signal processing of the uppermost row of the image from left to right and subsequently in the second row from left to right, on the basis of the positional information.

In piece of video equipment 100, in the case where it is possible to record both still images and moving images, there are, as stated above, performed operations like recording in the landscape position and recording in a portrait position in the case of recording still images. Similarly, even in the case of recording a moving image, there are users considering using piece of video equipment 100 in the landscape position.

In the case of a moving image, signal processing of rotations is usually not arranged for, so if the video is displayed as is with video display device 200, the result is a display in which the video is rotated to landscape, so it ends up becoming a recording not intended by the user. Accordingly, in case the recording is performed in the moving image mode, and in case the user rotates piece of video equipment 100 to use it, sensor 114 detects use in a portrait position, and a message evoking attention is displayed by microprocessor 115 in a display device 160. Display device 160 is used as a monitor of the image recorded in imaging device 110, making it easy to check messages while recording, and in an unintended case, attention is evoked so that the user changes to recording in the normal landscape position.

Moreover, at the same time, in the case of use in a portrait position, positional information is sent from microprocessor 115 to compression circuit 111 to control compression circuit 111. In this way, e.g. compression circuit 111 carries out compression signal processing from left toward the right in the uppermost row of a portrait position so as to make it possible to play back in accordance with the video recording operation and the recording position of piece of video equipment 100, e.g. as shown in Figs. 3D and 3E. As a result hereof, it is possible to view in the portrait position even with an existing television set. The detailed explanation thereof will be given subsequently.

In Fig. 2, a signal multiplexed in multiplexing circuit 116 is stored in a storage device 130 via an encryption/decryption circuit 140. As a storage device, it is possible to use a hard disk device, an optical disk device, a semiconductor memory device, it being acceptable to decide which kind of storage device is used by considering the desired storage volume, the size, the ease of extraction of the storage medium, and the like. Also, it is possible to store the signal in a memory 121 via a signal processing circuit 124 and a memory interface 120.

Regarding information recorded by an individual, since the recording person has the copyright therefor himself, encryption is normally unnecessary at the time of storage. However, since there is a possibility that the medium recorded with storage device 130 is lost, it is possible to increase security by storing it with storage device 130 or memory 121 after encrypting the output signal of multiplexing circuit 116 with encryption/decryption circuit 140.

There is both the case of piece of video equipment 100 handling a detachable (removable) memory and the case of its having a portable telephone function or a Wireless LAN function. Memory interface 120 is the interface of removable memory 121 and, when a still image or moving image video and audio content is stored in memory 121 in another piece of equipment, it is possible, by connecting the same memory to interface 120, to make a recording in storage device 130 via signal processing circuit 124 and encryption/decryption circuit 140.

At this point, it is detected in signal processing circuit 124 whether the content recorded in memory 121 is protected by copyright and the duplication thereof is restricted and, in accordance with the conditions, it is encrypted in encryption/decryption circuit 140 and transferred to storage device 130.

Similarly, even in the case where a still image or moving image video and audio content is received by a wireless interface 122 and input, it is recorded in storage device 130 via signal processing circuit 124 and encryption/decryption circuit 140. Even in this case, in accordance with conditions on content copyright protection and duplication restrictions, it is encrypted with encryption/decryption circuit 140, as the need arises.

In the case of playing back and viewing content stored in storage device 130, the content desired to be viewed is selected using a not illustrated input key or a remote control, the selected content is read from storage device 130, the encryption is decrypted in encryption/decryption circuit 140 and is separated into video signals and audio signals in a demultiplexing circuit 141.

Moreover, in the case of receiving a broadcast with a broadcast receiver 180, the encryption for broadcast is resolved in encryption/decryption circuit 140 and, as the need arises, encryption processing for storage is carried out in the same way in encryption/decryption circuit 140, and a recording is carried out in storage device 130 and memory 121. In the case of directly viewing a received broadcast, the broadcast is separated into video signals and audio signals in demultiplexing circuit 141.

The separated and compressed video signal is expanded in an expansion circuit 142 and input into a signal processing circuit 150. In signal processing circuit 150, a scan line conversion is carried out to adapt to the scan lines of a display device 160 and the signal is output to display device 160.

The separated and compressed audio signal is expanded in an expansion circuit 143 and output to an audio output device 161. In this way, since piece of video equipment 100 has a display device 160 and an audio output device 161, it is also possible to view the signal as is without connecting the video display device to the exterior. Further, if there is a time difference in the video display, the audio output, and the like, due to differences in the time required for expansion processing of the video signal and the audio signal and the presence or absence of scan line conversion processing, there arises a sense of discomfort. In particular, since the feeling of discomfort increases when time is required for the video signal processing and the audio signal precedes the video signal, delay processing of the audio signal is e.g. carried out within the expansion processing and so-called lip synchronization is performed. In this way, it is possible to eliminate the feeling of discomfort due to misalignment between the video signal and the audio signal.

As against this, in the case of viewing a video signal and an audio signal with an external video display device 200, scan lines that can be accommodated by video display device 200 are verified, in case they coincide with the scan lines of the video signal to be displayed, the signals are displayed unchanged, and in case they differ, there is, after converting them to the necessary scan lines in signal processing circuit 150, carried out multiplexing on the time axis by means of multiplexing circuit 170, with the audio signal processed in signal processing circuit 151. In signal processing circuit 151, there is carried out a time adjustment for lip synchronization matching, as the need arises, together with compressing the audio signal on the time axis by a time corresponding to the blanking time of the video signal. The video signal and audio signal multiplexed in multiplexing circuit 170 are input into an encryption circuit 171, there being carried out encryption necessary for transmitting between piece of video equipment 100 and video display device 200, and are output to video display device 200 via an interface 172 and a terminal 101.

As stated above, even though it is a moving image, in the case of using piece of video equipment 100 in a portrait position and carrying out compression signal processing as shown in Figs. 3D and 3E for the signal processing, scan line conversion is carried out in signal processing circuit 150, and a conversion is made to a scan line number with which video display device 200 can image. In that case, there occur non-depicted portions of the signal on the left-hand and right-hand sides of the screen. The signal is displayed on display device 160 in a so-called side panel state.

Further, in case the signal output from terminal 101 is stored at the recipient, the compressed signal is output without expansion. In this case, the compressed signal from encryption/decryption circuit 140 is input into encryption circuit 171 and, after carrying out the encryption necessary for transmission, is output via interface 172 and terminal 101. In the aforementioned explanation, the video signal and audio signal introduced from imaging device 110 and microphone 112, as well as the content input from memory 121 and wireless interface 122 were devised to be played back after being temporarily stored in storage device 130. However, in case storage is unnecessary, or in case of direct viewing, the processing may be carried out in demultiplexing circuit 141 without carrying out encryption and decryption processing in encryption/decryption circuit 140 for storage. By proceeding in this way, it becomes possible, using display device 160 and audio output device 161 built into piece of video equipment 100, to perform operations like viewing video and audio and viewing with an externally linked receiver via output interface 172.

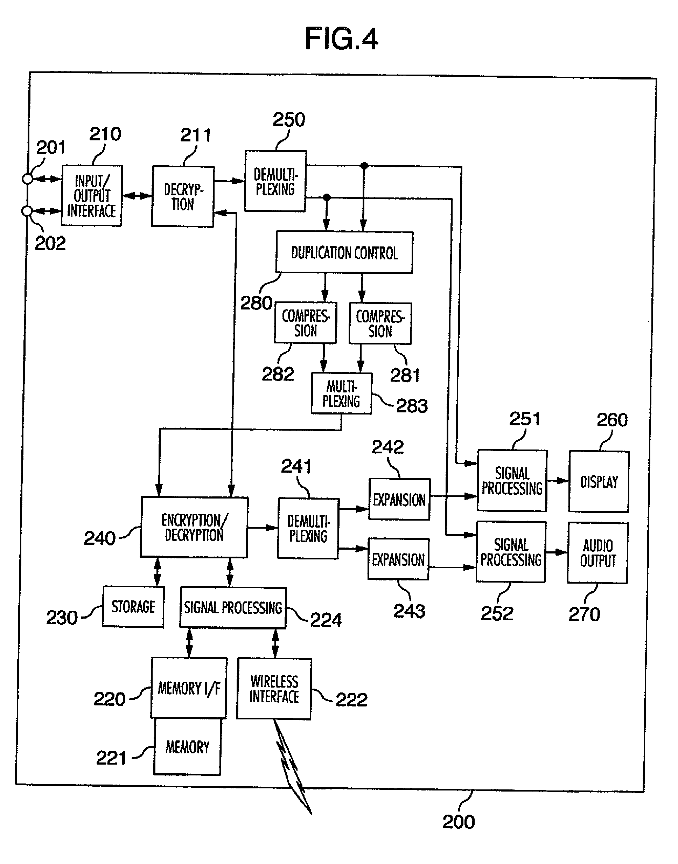

Fig. 4 is a diagram showing a specific configuration of video display device 200 shown in Fig. 1. Like reference numerals are attached to like portions, an explanation of the details thereof being omitted.

At the outset, an explanation will be given regarding the case in which a signal input from a terminal 201 or a terminal 202 is a non-compressed moving image baseband signal. The signal input from terminal 201 or terminal 202 is input into a decryption circuit 211 via an input/output interface 210. In decryption circuit 211, the encryption by encryption circuit 171 shown in Fig. 2 is handled by decrypting the signal encrypted in encryption circuit 171. The decrypted signal is input into a demultiplexing circuit 250, the video signal and audio signal being respectively input into signal processing circuits 251 and 252. In signal processing circuit 251, scan line conversion and resolution conversion is carried out to adapt to the number of pixels that it is possible to display with a display 260. In signal processing circuit 252, there is carried out an expansion on the time axis of an audio signal that is compressed on the time axis and multiplexed for video signal blanking and further, as the need arises, lip synchronization matching, sound quality adjustment, and the like are performed. The output signals of signal processing circuits 251 and 252 are respectively input into display 260 and an audio output device 270 and are viewed.

Next, there will be given an explanation regarding the case in which a compressed moving image signal from terminal 201 or terminal 202 is input. The object of inputting a compressed signal resides in storing the same moving image signal in a storage device 230 incorporated on the video display device 200 side.

The signal input from terminal 201 or terminal 202 is input into decryption circuit 211 via input/output interface 210. In decryption circuit 211, the encryption by encryption circuit 171 shown in Fig. 2 is handled by decrypting the signal encrypted in encryption circuit 171. The decrypted signal is input into an encryption/decryption circuit 240. In encryption/decryption circuit 240, copy control information of the content, for which a storage attempt is made, is read and in response thereto, there is carried out encryption processing for the storage. The encrypted signal is input into storage device 230 and stored compressed.

In the case of viewing, while storing, a compressed signal input from terminal 201 or terminal 202, a signal corresponding to a compressed signal with encryption resolved in decryption circuit 211 is first input from encryption/decryption circuit 240 to a demultiplexing circuit 241. Next, in demultiplexing circuit 241, it is separated into a compressed video signal and a compressed audio signal. The separated video signal and audio signal are respectively expanded in expansion circuits 242 and 243 and, after being returned to the baseband, are respectively input into signal processing circuits 251 and 252. In the following, similarly, they are input into display 260 and audio output device 270.

In the case of playing back and viewing content saved in storage device 230, the title et cetera of the content saved in storage device 230 is displayed on display 260 and selected and the signal of the selected content is input from storage device 230 into encryption/decryption circuit 240. By decrypting the signal of the content selected in encryption/decryption circuit 240, inputting it into demultiplexing circuit 241, and, in the following, similarly, processing it, it is possible to view the content'.

Similarly, it is also possible to play back content stored in memory 221. Similarly to the playback of the content saved in storage device 230, content desired to be viewed is selected from the content saved in memory 221 and the selected content is input into encryption/decryption circuit 240 via a memory interface 220 and signal processing circuit 224. In signal processing circuit 224, the processing necessary to read content from memory 221 is carried out and the compressed and multiplexed video signal and audio signal are input into encryption/decryption circuit 240. The subsequent signal processing is similar to the case of reading content from storage device 230.

Also, similarly to storing in storage device 230, it is possible to store content in memory 221. A detailed explanation of the processing in the same case is omitted, but the content encrypted in encryption/decryption circuit 240 is stored in memory 221 via signal processing circuit 224 and memory interface 220.

Even in the case of performing operations like viewing and storing content being gradually sent wirelessly, the same processing is carried out. The compressed content being gradually sent wirelessly is input into encryption/decryption circuit 240 via wireless interface 222 and signal processing circuit 224. In encryption/decryption circuit 240, there is decrypted the encryption of the encryption processing necessary for wireless transmission. The subsequent processing is the same as for the processing during playback from storage device 230.

Even in the case of a non-compressed baseband signal from terminal 201 or terminal 202 being input, it is possible to efficiently store content in storage device 230 and memory 221. Hereinafter, an explanation will be given regarding the same case.

Content input from terminal 201 or terminal 202 is separated into a video signal and an audio signal via input/output interface 210, decryption circuit 211, and demultiplexing circuit 250. The separated video signal and audio signal are input into compression circuits 281 and 282 via a duplication control circuit 280. In duplication control circuit 280, duplication control information multiplexed with the input content is read and it is judged whether duplication is possible or not. As for the duplication control information, both the case of allocating bits to designated portions and that of multiplexing the video information or audio information itself using electronic watermarking technology are possible.

Compression circuit 281 compresses a video signal using a compression scheme such as e.g. MPEG2, MPEG4, or AVC/H.264. Also, in compression circuit 282, an audio signal is compressed using a compression scheme such as e.g. MPEG Audio. The compression video signal and audio signal are input into a multiplexing circuit 283 and, after being multiplexed, are input into encryption/decryption circuit and can in the following similarly be stored in storage device 230 and memory 221. In this way, in accordance with the copyright information, it is possible to efficiently make a long-term recording of the content.

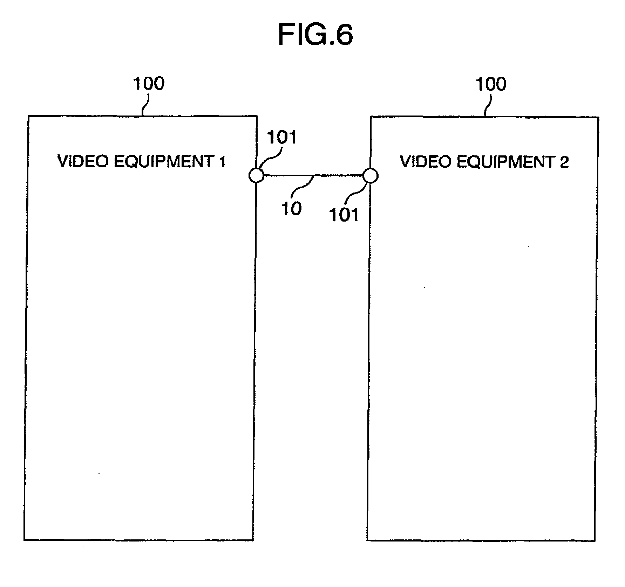

This far, regarding the present embodiment, an explanation has been given mainly relative to a case of transmitting a video signal and audio signal output from piece of video equipment 100 to video display device 200. Further, regarding the present embodiment, an explanation will be given using Fig. 6 relative to the case where two pieces of video equipment 100 are mutually connected. In Fig. 6, piece of video equipment 1 and piece of video equipment 2 are both constituted by a portable type piece of video equipment 100 such as e.g. a cellular phone or a digital camera and are connected between respective terminals 101 by means of a connecting cable 10 which is a bidirectional interface. By making a configuration in this way, regarding content such as a motion picture from cellular phone base station antenna 20, the content received at piece of video equipment 1 is transmitted to piece of video equipment 2 via connecting cable 10, so it is possible to perform operations like displaying using display device 160 within piece of video equipment 2 and outputting audio using audio output device 161 within piece of video equipment 2. Moreover, in the case of transmitting content stored in storage device 130 within piece of video equipment 1, the desired content is read from storage device 130 and decrypted in encryption/decryption circuit 140, on the basis of the contents of a control signal from piece of video equipment 2. And then, in encryption circuit 171, after carrying out encryption processing necessary for transmitting to the exterior, it is output via interface 172 and terminal 101. As control signals from piece of video equipment 2 at this point, there are used a mutual authentication signal for verifying that piece of video equipment 1 and piece of video equipment 2 are regular pieces of equipment, a synchronization control signal for obtaining signal processing synchronization, a transmission request signal, an identification signal indicating that the equipment is piece of video equipment 1, and the like. Further, as the need arises, control signals are also transmitted from piece of video equipment 1 to piece of video equipment 2.

As for signals transmitted and received by piece of video equipment 1 and piece of video equipment 2, not only signals received in this way from cellular phone base station antenna 20 but broadcast waves received by means of broadcast receiver 180, content stored in storage device 130, and content in memory 121 are also acceptable.

Piece of video equipment 1 and piece of video equipment 2 are e.g. one and the same pieces of video equipment 100. And then, these pieces of video equipment are, as mentioned above, mutually connected together over a bidirectional interface. There is also the case of sending information such as video and audio from piece of video equipment 1 with respect to piece of video equipment 2, but, on the contrary, it is also possible to send information such as video and audio from piece of video equipment 2 to piece of video equipment 1. Here, the direction of transmitting information from piece of video equipment 1 to piece of video equipment 2 is referred to as "uplink" and, inversely, the direction of transmitting information from piece of video equipment 2 to piece of video equipment 1 is defined to be "downlink". Of course, the reverse directions hereto may respectively be referred to as "uplink" and "downlink". And then, as for the bidirectional interface mutually connecting piece of video equipment 1 and piece of video equipment 2, the transmission rates in the uplink and the downlink are devised to be asymmetric, that is to say that the transmission rates mutually differ. And then, in the case of sending information such as broadband video and audio in the uplink direction, i.e. from piece of video equipment 1 to piece of video equipment 2, narrowband (compared to video, audio, and the like) control signals are sent from piece of video equipment 2 to piece of video equipment 1. On the contrary, in the case of sending information such as broadband video and audio in the downlink direction, i.e. from piece of video equipment 2 to piece of video equipment 1, narrowband control signals are sent from piece of video equipment 1 to piece of video equipment 2. Accordingly, from among the uplink and the downlink, the transmission rate in the direction in which broadband video and audio is transmitted is raised and, moreover, the transmission rate in the direction in which narrowband control signals are transmitted is reduced. Since, in the present embodiment, information and signals with bandwidths that differ in the uplink and the downlink are made to be transmitted in this way between a plurality of differing pieces of video equipment, it is possible to simultaneously use, in a limited frequency band, video signals for whose transmission a broad band is necessary and control signals for which a narrow band is acceptable, so there is the effect of raising the efficiency of use. Further, control signals are not transmitted from one piece of equipment only but are, as the need arises, also transmitted from the piece of equipment on the opposite side.

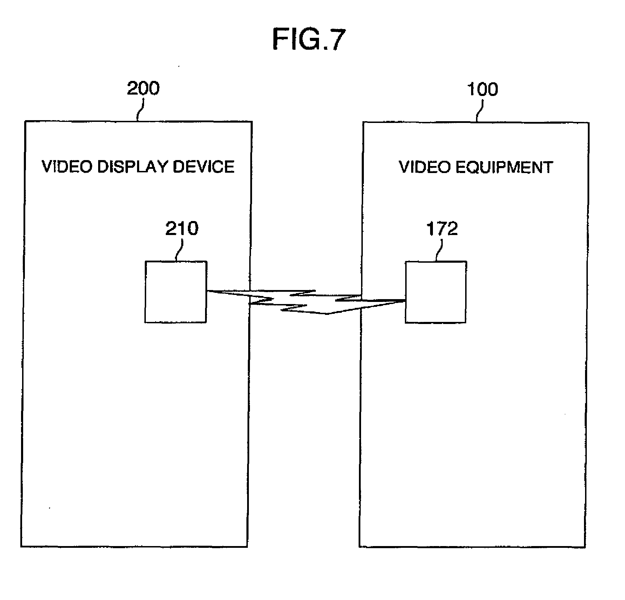

Fig. 7 is a block diagram for the case, regarding Embodiment 1, where video display device 200 and piece of video equipment 100 are connected wirelessly. In Fig. 7, for ease of explanation, no part other than input/output interface 210 and interface 172 are illustrated. In this way, the bidirectional interface connecting the pieces of video equipment together is not one limited to a wireline cable, but it is also acceptable to configure the bidirectional interface wirelessly. In this case, the degree of liberty in arranging each piece of equipment is increased.

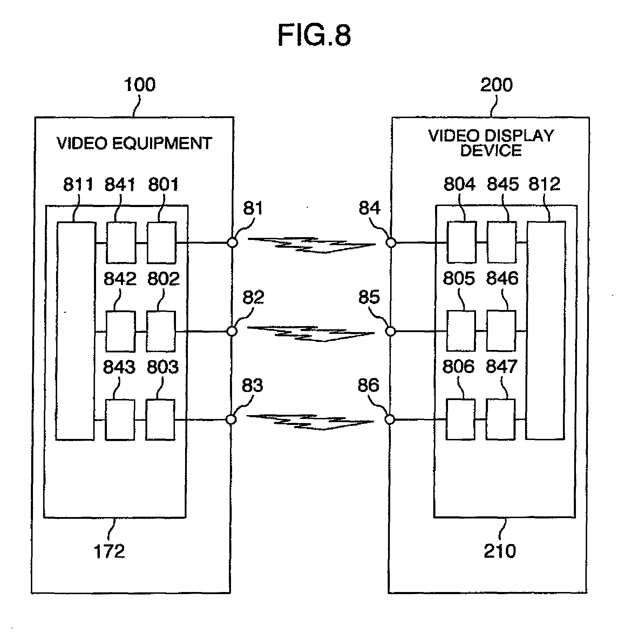

Fig. 8 is an explanatory diagram for the case where piece of video equipment 100 and video display device 200 are connected wirelessly. In Fig. 8, piece of video equipment 100 and video display device 200 are respectively the same as explained in Fig. 1 and Fig. 2. For ease of explanation, in Fig. 8, regarding the configuration requirements for piece of video equipment 100, only interface circuit 172 is included, other configuration requirements not being illustrated. Also, regarding video display device 200, only input/output interface 210 is included, other configuration requirements not being illustrated. Here, interface circuit 172 and input/output interface 210 are both bidirectional interfaces and, similarly to the aforementioned examples, the transmission rates are taken to be asymmetric in the uplink and the downlink.

In Fig. 8, between antennas 81 and 84, and between antennas 82 and 85, there are respectively channels for bidirectionally transmitting control signals indicating copyright protection and duplication restrictions for video signals, audio signals, and content. As against this, the channel between antennas 83 and 86 is a channel for transmitting inter-equipment control signals. Moreover, control signals indicating copyright protection and duplication restrictions for video signals, audio signals, and content, and inter-equipment control signals are input into bit selection circuits 811 and 812. Regarding the aforementioned modulation and demodulation scheme, the QPSK modulation and demodulation scheme has a higher robustness against transmission errors, in comparison with the 64QAM modulation and demodulation scheme. Moreover, regarding the transmission efficiency, the 64AM modulation and demodulation scheme has a higher efficiency than the QPSK modulation and demodulation scheme. Here, an explanation will be given regarding the case of sending control signals indicating copyright protection and duplication restriction requirements of video, audio, and content related hereto, from piece of video equipment 100 to video display device 200. Here, the direction of transmitting information from piece of video equipment 100 to video display device 200 is taken to be the uplink and, reversely, the direction of transmitting information from video display device 200 to piece of video equipment 100 is taken to be the downlink.

In order for piece of video equipment 100 to carry out transmission of information, it is first investigated, by means of a carrier wave detection circuit (not illustrated), whether the used channel is already occupied by another piece of equipment. This carrier wave detection is carried out by detecting whether there exists a carrier wave for a prescribed duration and in a prescribed frequency band. When the carrier wave detection circuit has detected that another piece of equipment is using the same channel, it sets aside time for a while and examines the idle state of the channel for a second time. Thereafter, when it has detected that the concerned channel is not used by another piece of equipment, it reports to microprocessor 115 of piece of video equipment 100 that the channel has become idle. Microprocessor 115 outputs, as an inter-equipment control signal, a channel use request signal from a QPSK modulation and demodulation circuit 803 to ensure the right of use of the channel. Next, microprocessor 115 outputs a transmission request signal to bit selection circuit 811. An error control circuit 843 adds error control bits for error detection and correction to this transmission request signal and sends it to QPSK modulation and demodulation circuit 803. QPSK modulation and demodulation circuit 803 carries out QPSK modulation and transmits a wireless signal to video display device 200 via antenna 83. Moreover, video display device 200 makes a QPSK demodulation of the wireless signal received by antenna 86 by means of a QPSK modulation and demodulation circuit 806 and by carrying out error detection and correction control by means of an error control circuit 847, and outputs an inter-equipment control signal and transmits it to bit selection circuit 812.

The microprocessor inside video display device 200 decodes the received inter-equipment control signal and, together with the transmission request signal from piece of video equipment 100, receives equipment category information pertaining to piece of video equipment 100 (information for identifying the category stating whether it is a display device, a recording device, et cetera) and an equipment identification number of piece of video equipment 100. Since a display is performed on the display screen of video display device 200 as to whether a connection with piece of video equipment 100 is carried out, the user emits a command authorizing connection on the basis of this display, using input equipment such as the remote control of video display device 200. After this, mutual equipment category information and identification numbers for identifying the mutual pieces of equipment are exchanged between piece of video equipment 100 and video display device 200, an information exchange for abiding by content copyright protection and duplication restriction conditions is executed and in case there is no problem, a mutual connection is authorized. Here, in the case where it makes no sense to establish a connection such as in case the mutual pieces of equipment are equipment dedicated to inputs or in the case of equipment dedicated to outputs, or the like, and also in the case of violating content copyright protection or duplication restriction conditions, or the like, connection processing is terminated and a display to that effect is displayed on the respective pieces of equipment. Hereinafter, an explanation will be given for the case where there is no problem with content copyright protection or duplication restriction conditions.

From among a video signal and an audio signal input into interface circuit 172, and control signals indicating content copyright protection and duplication restriction conditions related hereto, there are selected two bits from the MSB (Most Significant Bits) and added control bits for error detection and correction with respect to the same two bits by means of an error control circuit 841, the bits being sent to QPSK modulation and demodulation circuit 801. And then, with respect to this signal, QPSK modulation and demodulation circuit 801 performs QPSK modulation and a wireless signal is sent from antenna 81. Also, with respect to the remaining third to eighth bits, control bits for error detection and correction are added by means of an error control circuit 842, the bits being sent to 64QAM modulation and demodulation circuit 802. And then, with respect to this signal, 64QAM modulation is performed by 64QAM modulation and demodulation circuit 802 and a wireless signal is sent from antenna 82.

In video display device 200, after a QPSK modulation and demodulation circuit 804 has performed QPSK demodulation with respect to a signal received by antenna 84 and error control has been carried out by means of an error control circuit 845, the two most significant bits of the video signal are output to bit control circuit 812. After a 64QAM modulation and demodulation circuit 805 has performed 64QAM demodulation with respect to the remaining signal received by antenna 85 and error control has been carried out by means of an error control circuit 846, the signal is output to bit control circuit 812.

Here, an explanation will be given regarding inter-equipment control signals. An inter-equipment control signal, in the case of the downlink direction, i.e. where the signal is transmitted from video display device 200 to piece of video equipment 100, passes through an error control circuit 847 from bit selection circuit 812, is modulated by means of QPSK modulation and demodulation circuit 806 and output from antenna 86. Piece of video equipment 100 receives this signal with antenna 83, performs[, via a QPSK modulation and demodulation circuit 803,] a QPSK demodulation thereof by means of QPSK modulation and demodulation circuit 803 and then, after carrying out error detection and correction by means of error control circuit 843, transmits it to bit selection circuit 811. On the contrary, an inter-equipment control signal, in the uplink direction, i.e. in the case of transmitting the signal from piece of video equipment 100 to video display device 200, is transmitted from bit selection circuit 811 via error control circuit 843, modulated by means of QPSK modulation and demodulation circuit 803, and transmitted from antenna 83. Video display device 200 receives this signal with antenna 86, performs a QPSK demodulation thereof by means of QPSK modulation and demodulation circuit 806 and then, after carrying out error detection and correction by means of error control circuit 847, sends the signal to bit selection circuit 812. By proceeding in this way, there is the effect that, with respect to inter-equipment control signals which are important in constructing the system, erroneous operation becomes rarer, even in an environment with much noise.

Regarding the two most significant bits, in the configuration of the present embodiment, it becomes possible to carry out transmission with a transmission rate that is low but has excellent noise robustness performance. In other words, it is a configuration that, utilizing the fact that the influence exerted on image quality is greater for the most significant bits of a video signal, extracts in order the two most significant bits of the video signal and, with respect to the information of these, assigns a transmission path using QPSK modulation to reduce the degradation of image quality. Incidentally, in systems where audio information is more important than video, it is possible to assign a transmission path using QPSK modulation with respect to the two important bits (e.g. the most significant ones) of an audio signal.

Further, in the case where a human being perceives images, regarding the respective frequency component of the horizontal direction of the screen and frequency component of the vertical direction of the screen, there is the tendency that, as against the lower components, the higher components are comparatively less disturbing. Moreover, among the objects moving inside the screen, there is the tendency that the eyes of a human being cannot follow the faster movements. Utilizing these tendencies, it is acceptable to devise the system so that, regarding the horizontal direction of the screen, there is performed a split into low-frequency components and high-frequency components, QPSK modulation being used with respect to the low-frequency components and 64QAM modulation being used with respect to the high-frequency components. By proceeding in this way, it becomes possible, within a limited transmission band, to ensure overall transmission capacity together with raising the noise robustness with respect to important information. Similarly, regarding the vertical direction of the screen as well, there is performed a split into low-frequency components and high-frequency components, QPSK modulation being used with respect to the low-frequency components and 64QAM modulation being used with respect to the high-frequency components. By proceeding in this way, it becomes possible, within a limited transmission band, to ensure overall transmission capacity together with raising the noise robustness with respect to important information. Further, it is also possible to combine the treatment of the frequency components for the horizontal direction of the screen and the treatment of the frequency components for the vertical direction of the screen to raise the noise robustness with respect to some desired important information.

In the aforementioned explanation, the explanation was given so that error control circuits **841,** 842, and 843 add error control information for the respective bits input into error control circuits 841, 842, and 843, but it is also acceptable to consolidate the bits input into error control circuits 841, 842, and 843, treat them as one word, and add error control information with respect to this one word. By making a configuration in this way, the error control circuits become simple and easy to configure.

Using the configuration of Fig. 8, it is possible, specifically, to switch a plurality of still images recorded by means of piece of video equipment 100 every second, transmit them to video display device 200 and display them with video display device 200. A signal acting as a trigger for transmitting images is sent from video display device 200 to piece of video equipment 100 and, on the basis of this trigger, piece of video equipment 100 switches the still images and transmits new still images to video display device 200-By making a configuration in this way, in case images cannot be played back in video display device 200, it becomes possible, by sending a trigger signal to piece of video equipment 100 for a second time, and repeat until the images can be correctly received. Even in this case, regarding the control signals, noise robustness is excellent since QPSK modulation is used.

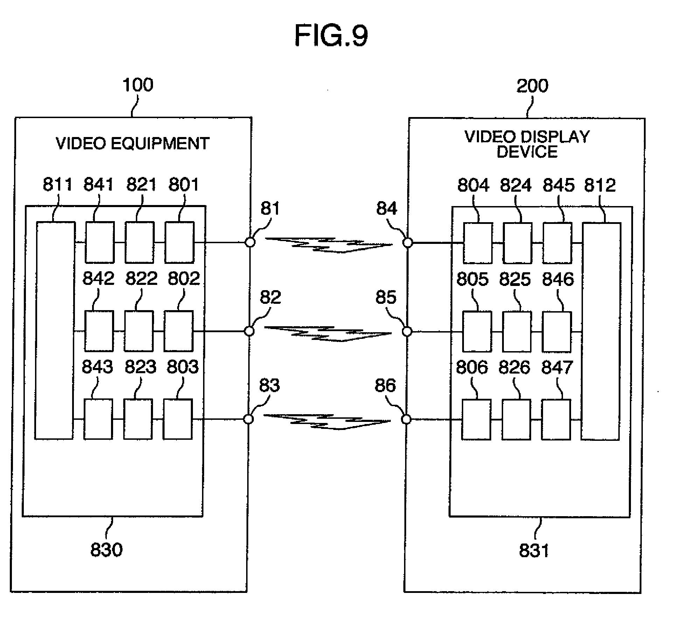

Further, in the embodiment shown in Fig. 8, no explanation was given regarding the details of the encryption processing, but, combining encryption circuit 171 and interface circuit 172, it is possible to carry out processing, as shown in Fig. 9. Fig. 9 shows an example of a configuration for carrying out encryption processing in the system shown in Fig. 8, the system of Fig. 9 being constituted by including encryption/decryption circuits 821 to 826, interface circuits 830 and 831 including encryption processing, and error control circuits 841, 842, 843, 845, 846, and 847.

In the example shown in Fig. 9, similarly to the example of Fig. 8, designated bits are selected in bit selection circuit 811 and, after carrying out error control of the respective bits by means of error control circuits 841 and 842, the bits are encryption processed in encryption/ decryption circuits 821 and 822 and input into QPSK modulation and demodulation circuit 801 and 64QAM modulation and demodulation circuit 802. Also, the signals demodulated in QPSK modulation and demodulation circuit 804 and 64QAM modulation and demodulation circuit 805 are input into encryption/decryption circuits 824 and 825 and, after being respectively decrypted, are combined in bit selection circuit 812. By performing processing in this way, signal processing corresponding to the degree of importance becomes possible and important information is little prone to error, so, consequently, it becomes possible to reduce image quality degradation and to transmit efficiently.

Also, by combining reversible codes in encryption/decryption circuits 821 to 826, it becomes possible to transmit with efficiency raised further. E.g., in the example shown in Fig. 9, before carrying out encryption processing in encryption/decryption circuits 821 to 823, encryption is carried out after cutting back the bits to be transmitted, by means of reversible algebraic signs using e.g. statistical properties. In video display device 200, after decrypting in encryption/decryption circuits 824 to 826 and after carrying out decryption of reversible codes corresponding to encryption/decryption circuits 821 to 823, error detection and correction is carried out in error control circuits 845 to 847 and the codes are bit combined in bit selection circuit 812. Since the transmission rate of the information to be transmitted can be reduced by combining the reversible codes, transmission with even better efficiency becomes possible.

Further, a supplementary explanation will be given regarding the encryption. If processing is performed using AES 128-bit encryption processing for all the encryption circuits, it becomes possible to perform protection processing with high security. In addition to this, if AES 128-bit encryption processing is used for content encryption circuit 821 and DES encryption processing is used for the other encryption circuits, a balance can be struck between protection of content that is essential to the system and processing efficiency, so it becomes easy to configure the system.

Moreover, it is further acceptable, in accordance with an inter-equipment control signal, to configure the system so that baseband signal transmission and compressed signal transmission can be switched. If the configuration is made in this way, transmission with excellent error robustness in the transmission path becomes possible by transmission using QPSK modulation in the case of transmitting a compressed signal in response to requests for content protection and the like. Also, in the case of transmitting a baseband signal, transmission with high transmission efficiency by means of 64QAM modulation becomes possible.

The operation between piece of video equipment 100 and video display device 200 in Fig. 9 is basically the same as the operation between piece of video equipment 100 and video display device 200 in Fig. 8. In order for piece of video equipment 100 to carry out transmission, it is first examined by means of a carrier wave detection circuit (not illustrated) whether the used channel is already occupied by another piece of equipment. As for this carrier wave detection, the detection is carried out by detecting whether a carrier wave exists for a prescribed duration and in a prescribed frequency band. When the carrier wave detection circuit detects that another piece of equipment is using the same channel, it sets aside time for a while and once again examines the idle state of the channel. Thereafter, when it has detected that the concerned channel is not used by another piece of equipment, it reports to microprocessor 115 of piece of video equipment 100 that the channel has become idle. Microprocessor 115 outputs, as an inter-equipment control signal, a channel use request signal from a QPSK modulation and demodulation circuit 803 to ensure the right of use of the channel. Next, microprocessor 115 outputs a transmission request signal to bit selection circuit 811.

Error control circuit 843 adds error control bits for error detection and correction with respect to this transmission request signal, encrypts it by means of encryption/decryption circuit 823, and sends it to QPSK modulation and demodulation circuit 803. QPSK modulation and demodulation circuit 803 carries out QPSK modulation and transmits a wireless signal to video display device 200 via antenna 83. Moreover, video display device 200 performs QPSK demodulation, by means of QPSK modulation and demodulation circuit 806, of the wireless signal received by antenna 86 and demodulates it by means of encryption/decryption circuit 826. By carrying out error detection and correction control with respect to this demodulated signal by means of error control circuit 847, the device outputs an inter-equipment control signal and transmits the signal to bit selection circuit 812. A microprocessor inside video display device 200 decodes the received inter-equipment control signal, and receives, together with a transmission request signal from piece of video equipment 100, equipment category information (information for identifying the category stating whether it is a display device, a recording device, et cetera) pertaining to piece of video equipment 100 and an equipment identification number of piece of video equipment 100. Since a display is performed on the display screen of video display device 200 as to whether a connection with piece of video equipment 100 is carried out, the user emits a command authorizing connection on the basis of this display, using input equipment such as the remote control of video display device 200. After this, mutual equipment category information and identification numbers for identifying the mutual pieces of equipment are exchanged between piece of video equipment 100 and video display device 200, an information exchange for abiding by content copyright protection and duplication restriction conditions is executed and, in case there is no problem, a mutual connection is authorized. Here, in the case where it makes no sense to establish a connection such as in case the mutual pieces of equipment are equipment dedicated to inputs or in the case of equipment dedicated to outputs, or the like, and also, in the case of violating content copyright protection or duplication restriction conditions, or the like, connection processing is terminated and a display to that effect is displayed on the respective pieces of equipment. By proceeding in this way, a connection is carried out in the case where there is no problem with content copyright protection or duplication restriction conditions, and video, audio, and the like are transmitted from piece of video equipment 100 to video display device 200.

### Second Embodiment

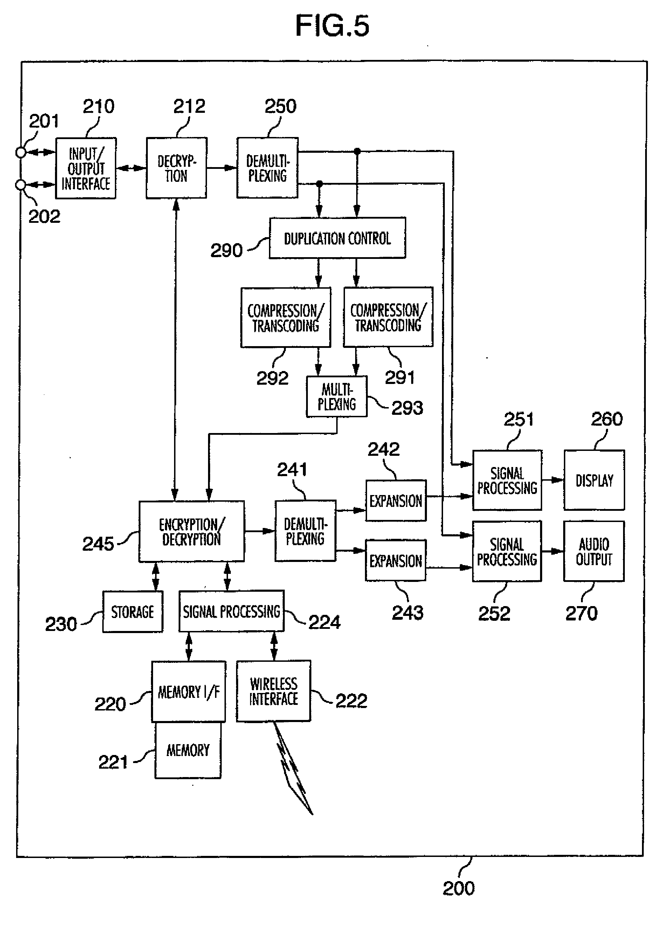

Fig. 5 shows another configuration, being Embodiment 2 of the present invention, of video display device 200 shown in Fig. 1. The embodiment of Fig. 5 is in part common with the embodiment shown in Fig. 4, like numbers being attached to the common parts thereof and a detailed explanation thereof being omitted. Video display device 200 shown in Fig. 5 includes a decryption circuit 212, encryption/decryption circuits 245 and 290, compression/transcoding circuits 291 and 292, and a duplication control circuit 293, which is a multiplexing circuit.

In the embodiment shown in Fig. 5, the embodiment functions in the same way as the embodiment shown in Fig. 4 in the case where a baseband signal is input from terminal 201 or terminal 202. Compression/transcoding circuits 291 and 292 operate as compression circuits with respect to the baseband signal. In case a compressed signal is input from terminal 201 or 202, the encryption necessary for transmission is decrypted in decryption circuit 212, via input/output interface 210, and the signal is separated in demultiplexing circuit 250 into a compressed video signal and a compressed audio signal. The respective signals are input into duplication control circuit 290 and it is judged, from information indicating the possibility of duplication, whether duplication is possible or not. In case duplication is possible, the bit rates of the compressed video signal and the compressed audio signal are reduced by performing operations such as using a compression scheme with better compression efficiency in compression/transcoding circuits 291 and 292, as the need arises. The output signals of compression/transcoding circuits 291 and 292 are multiplexed in multiplexing circuit 293 and input into encryption/decryption circuit 245. Here, in case it is detected that duplication is authorized in duplication control circuit 290, encryption/decryption circuit 245 carries out encryption processing for suitable storage with respect to the concerned signal and stores it in storage device 230 and/or memory 221. In the case of playing back the stored signal, the playback signal from storage device 230 and memory 221 is decrypted in encryption/decryption circuit 245 and separated into a video signal and an audio signal in demultiplexing circuit 241, is processed in the same way as mentioned above beyond this, and can be viewed. In the case of viewing while storing in storage device 230 or memory 221, a signal from multiplexing circuit 293 is input via encryption/decryption circuit 245 into demultiplexing circuit 241, and is processed in the same way. In this case, it is possible to check the transcoded image quality. Further, in the case of viewing directly without storing, a signal is input from decryption circuit 212 via encryption/decryption circuit 245 into demultiplexing circuit 241, is separated here into a video signal and an audio signal, and is in the following processed in the same way.

In the embodiment shown in Fig. 5, even in the case where a compressed signal is input, it is possible, by carrying out transcoding, to carry out storage with a higher compression ratio and more efficiently. Also, in the present embodiment, starting with compression circuits 111 and 113, an example of implementing the signal processing means with a circuit has been shown. However, the aforementioned processing may be carried out by configuring the various circuit elements with software-like means and even in that case, it is possible to cite the same effect. The present invention is not one that is limited to the manner of implementing signal processing.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

Further features of the invention are discussing in the following clauses:
1. A transmission method for transmitting, between a first piece of video equipment (100) and a second piece of video equipment (200), a baseband video signal and/or a compressed video signal by means of a bidirectional interface (10), wherein:
   said bidirectional interface (10) has transmission rates that are asymmetric in the case of transmitting information from said first piece of video equipment (100) to said second piece of video equipment (200) and in the case of transmitting information from said second piece of video equipment (200) to said first piece of video equipment (100); and either of the information transmitted from said first piece of video equipment (100) to said second piece of video equipment (200) and the information transmitted from said second piece of video equipment (200) to said first piece of video equipment (100) has a bandwidth that differs from the bandwidth of other information.
2. The transmission method according to clause 1, wherein:
   in case broadband information is transmitted from said first piece of video equipment (100) to said second piece of video equipment (200), narrowband information is transmitted from said second piece of video equipment (200) to said first piece of video equipment (100); and,
   in case broadband information is transmitted from said second piece of video equipment (200) to said first piece of video equipment (100), narrowband information is transmitted from said first piece of video equipment (100) to said second piece of video equipment (200) .
3. The transmission method according to clause 2, wherein:
   in case said baseband video signal is transmitted, there is performed bit compression using reversible code with respect to said baseband video signal and said bit compressed video signal is, further, encrypted and transmitted; and
   in case said compressed video signal is transmitted, said compressed video signal is encrypted and transmitted.
4. The transmission method according to clause 2, wherein:
   an encrypted video signal is included in said broadband information and control information is included in said narrowband information.
5. The transmission method according to clause 2, wherein:
   rotational information for the time of displaying said video information is included in said broadband information.
6. The transmission method according to clause2, wherein:
   with respect to bits that exert great influence on the image quality of said video signal, transmission is performed using a modulation scheme with a great degree of redundance; and,
   with respect to bits that exert little influence on the image quality of said video signal, transmission is performed using a modulation scheme with a small degree of redundance.
7. A transmission device (100) capable of transmitting both a baseband video signal and/or a compressed video signal and capable of transmission and reception of video signals using a bidirectional transmission interface (10) whose transmission rate is asymmetric in the uplink and the downlink, comprising :
   a transmission part (172) receiving narrowband information in the downlink in case broadband information is transmitted in the uplink and transmitting narrowband information in the uplink in case broadband information is received in the downlink;
   a modulation part (111, 113, 116) modulating by using a modulation scheme with a great degree of redundance with respect to bits that exert great influence on the image quality of said video signal and modulating by using a modulation scheme with a small degree of redundance with respect to bits that exert little influence on the image quality of said video signal, in case said broadband video information is transmitted in said transmission part (172); and
   a demodulation part (241, 242, 243) demodulating a signal transmitted using a modulation scheme with a great degree of redundance with respect to bits that exert great influence on the image quality of said video signal, and demodulating a signal transmitted using a modulation scheme with a small degree of redundance with respect to bits that exert little influence on the image quality of said video signal, in case said broadband information is received in said transmission part (210).
8. A video equipment (100) having an imaging part (110) and a microphone (112), comprising:
   a first compression part (111) compressing a baseband video signal corresponding to a video imaged with said imaging part (110);
   a second compression part (113) compressing a baseband audio signal from said microphone (112);
   a wireless input part (122) receiving a compressed information signal;
   a first expansion part (142) expanding a compressed video signal included in the information signal input into said wireless input part (122) and obtaining a baseband video signal;
   a second expansion part (143) expanding a compressed audio signal included in the information signal input into said wireless input part (122) and obtaining a baseband audio signal; and
   an output part (160, 161) capable of outputting at least either of: compressed information including a compressed video signal obtained with said first compression part (111) and a compressed audio signal obtained with said second compression part (113), and a baseband signal including a baseband video signal obtained with said first expansion part (142) and a baseband audio signal obtained with said second expansion part (143).
9. The video equipment (100) according to clause 8, wherein:
   a video signal compressed in said first compression part (111) and an audio signal compressed in said second compression part (113) and/or a compressed video signal input into said wireless input part (122) and a compressed audio signal input into said wireless input (122) part can be recorded on storage medium (130).
10. The video equipment (100) according to clause 8, further comprising:
   a position sensor (114) detecting rotational information of said piece of video equipment (100);
   a video signal compression part (111) compressing a baseband video signal imaged with said imaging part (110);
   a multiplexing signal processing part (116) multiplexing a video signal compressed in said compression part (111) and rotational position information detected with said position sensor (114); and
   an output part (160, 161) capable of outputting at least either of the compressed information multiplexed in said multiplexing signal processing part (116) and a baseband video signal; wherein
   the compressed information multiplexed in said multiplexing signal processing part (116) can be recorded on a storage medium (130).
11. The video equipment (100) according to clause 10, wherein:
   said compression part (111) adjusts, on the basis of the rotational position information detected with said position sensor, the portrait/landscape position of said imaged baseband video signal and carries out compression processing.
12. The video equipment according to clause 10, wherein:
   in case a moving image is imaged, a prescribed message is displayed on said display part (160) when said position sensor (114) has detected that said piece of video equipment (100) is rotated.
13. The video equipment (100) according to clause 10, further comprising:
   a microphone (112); and
   a second compression part (113) compressing a baseband audio signal from said microphone (112);
   wherein it is possible to record the compressed video signal from said compression part (111) and the compressed audio signal from said second compression part (113) on a storage medium (130).
14. The video equipment (100) according to clause 13, wherein:
   said multiplexing signal processing part (116) multiplexes a compressed video signal from said compression part (111), a compressed audio signal from said second compression part (113), and rotational position information detected with said position sensor (114).
15. A display device (200) comprising:
   an input part (210) capable of inputting encrypted compressed video information and an encrypted first piece of baseband video information;
   a decryption part (211) decrypting the compressed video information and a first piece of baseband video information input from said input part (210);
   an expansion part (242) for expanding the compressed video information decrypted with said decryption part (211) and obtaining a second piece of baseband video information; and
   a display part (260) displaying at least either of: the first piece of baseband video information decrypted with said decryption part (211) and the second piece of baseband video information from said expansion part (242).
16. The display device (200) according to clause 15, further comprising:
   a compression part (281) compressing said decrypted first piece of baseband video information; and
   a storage part (230);
   wherein said storage part (230) is capable of storing at least one of: the first piece of baseband video information compressed in said compression part (281), and the compressed video information decrypted in said decryption part (211).
17. The display device (200) according to clause 15, wherein:
   said compression part (281) converts the bit rate, with respect to the compressed video information decrypted in said decryption part (211), so that it becomes lower than the bit rate of said compressed video information.
18. The display device (200) according to clause 15, wherein:
   the compressed video information input from said input part (210) includes rotational information for the time of displaying said video information; and, further, said display device (200) has a rotational processing part (251) for video information expanded in said expansion part (242), in accordance with said rotational information, and displays, in said display part (260), the video information rotationally processed in said rotational processing part (251).
19. The display device (200) according to clause 15, wherein:
   said input part (210) comprises a first demodulation circuit (804) handling a first demodulation scheme and a second demodulation circuit (805) handling a second demodulation scheme;
   the first bit information inside the first piece of baseband video information input into said input part (210) is demodulated by means of said first demodulation circuit (804);
   the second bit information inside the first piece of baseband video information input into said input part (210), having lower priority than said first bit information, is demodulated by means of said second demodulation circuit (805); and
   the first bit information, being the output of said first demodulation circuit (804), and the second bit information, being the output of said second demodulation circuit (805), are combined and supplied to said decryption part (211).

## Claims

1. A video equipment (100) having an imaging part (110) and a microphone (112), comprising:
a first compression part (111) compressing a baseband video signal corresponding to a video imaged with said imaging part (110);
a second compression part (113) compressing a baseband audio signal from said microphone (112);
a wireless input part (122) receiving a compressed information signal;
a first expansion part (142) expanding a compressed video signal included in the information signal input into said wireless input part (122) and obtaining a baseband video signal;
a second expansion part (143) expanding a compressed audio signal included in the information signal input into said wireless input part (122) and obtaining a baseband audio signal; and
an output part (160, 161) capable of outputting at least either of: compressed information including a compressed video signal obtained with said first compression part (111) and a compressed audio signal obtained with said second compression part (113), and a baseband signal including a baseband video signal obtained with said first expansion part (142) and a baseband audio signal obtained with said second expansion part (143).

2. The video equipment (100) according to claim 1, wherein:
a video signal compressed in said first compression part (111) and an audio signal compressed in said second compression part (113) and/or a compressed video signal input into said wireless input part (122) and a compressed audio signal input into said wireless input (122) part can be recorded on storage medium (130).

3. The video equipment (100) according to claim 1, further comprising:
a position sensor (114) detecting rotational information of said piece of video equipment (100);
a video signal compression part (111) compressing a baseband video signal image with said imaging part (110);
a multiplexing signal processing part (116) multiplexing a video signal compressed in said compression part (111) and rotational position information detected with said position sensor (114); and
an output part (160, 161) capable of outputting at least either of the compressed information multiplexed in said multiplexing signal processing part (116) and a baseband video signal; wherein
the compressed information multiplexed in said multiplexing signal processing part (116) can be recorded on a storage medium (130).

4. The video equipment (100) according to claim 3, wherein:
said compression part (111) adjusts, on the basis of the rotational position information detected with said position sensor, the portrait/landscape position of said imaged baseband video signal and carries out compression processing.

5. The video equipment according to claim 3, wherein:
in case a moving image is imaged, a prescribed message is displayed on said display part (160) when said position sensor (114) has detected that said piece of video equipment (100) is rotated.

6. The video equipment (100) according to claim 3, further comprising:
a microphone (112); and
a second compression part (113) compressing a baseband audio signal from said microphone (112);
wherein it is possible to record the compressed video signal from said compression part (111) and the compressed audio signal from said second compression part (113) on a storage medium (13D).

7. The video equipment (100) according to claim 6, wherein:
said multiplexing signal processing part (116) multiplexes a compressed video signal from said compression part (111), a compressed audio signal from said second compression part (113), and rotational position information detected with said position sensor (114).

8. A display device (200) comprising:
an input part (210) capable of inputting encrypted compressed video information and an encrypted first piece of baseband video information;
a decryption part (211) decryption the compressed video information and a first piece of baseband video information input part (210);
an expansion part (242) for expanding the compressed video information decrypted with said decryption part (211) and obtaining a second piece of baseband video information; and
a display part (260) displaying at least either of: the first piece of baseband video information decrypted with said decryption part (211) and the second piece of baseband video information from said expansion part (242).

9. The display device (200) according to claim 8, further comprising:
a compression part (281) compressing said decrypted first piece of baseband video information; and
a storage part (230);
wherein said storage part (230) is capable of storing at least one of: the first piece of baseband video information compressed in said compression part (281), and the compressed video information decrypted in said decryption part (211).

10. The display device (200) according to claim 8, wherein:
said compression part (281) converts the bit rate, with respect to the compressed video information decrypted in said decryption part (211), so that it becomes lower than the bit rate of said compressed video information.

11. The display device (200) according to claim 8, wherein:
the compressed video information input from said input part (210) includes rotational information for the time of displaying said video information; and, further, said display device (200) has a rotational processing part (251) for video information expanded in said expansion part (242), in accordance with said rotational information, and displays, in said display part (260), the video information rotationally processed in said rotational processing part (251).

12. The display device (200) according to claim 8, wherein:
said input part (210) comprises a first demodulation circuit (804) handling a first demodulation scheme and a second demodulation circuit (805) handling a second demodulation scheme;
the first bit information inside the first piece of baseband video information input into said input part (210) is demodulated by means of said first demodulation circuit (804);
the second bit information inside the first piece of baseband video information input into said input part (210), having lower priority than said first bit information, is demodulated by means of said second demodulation circuit (805); and
the first bit information, being the output of said first demodulation circuit (804), and the second bit information, being the output of said second demodulation circuit (805), are combined and supplied to said decryption part (211).
